# EUROPEAN PATENT SPECIFICATION

(11) **EP 4 419 398 B1**
(45) Date of publication and mention of the grant of the patent: **30.09.2026**
(21) Application number: 22789919.2
(22) Date of filing: 26.09.2022
(51) Int. Cl.: B60S 1/48, B60S 1/50, G01F 23/80, B60S 1/56

(54) **CLEANING LIQUID RESERVOIR SYSTEM, SENSOR CLEANING SYSTEM, VEHICLE**
REINIGUNGSFLÜSSIGKEITSBEHÄLTERSYSTEM, SENSORREINIGUNGSSYSTEM, FAHRZEUG
SYSTÈME DE RÉSERVOIR DE LIQUIDE DE NETTOYAGE, SYSTÈME DE NETTOYAGE DE CAPTEUR, VÉHICULE

(30) Priority: 18.10.2021 IN 202111047209
(43) Date of publication of application: 28.08.2024
(73) Proprietor: ZF CV Systems Global GmbH, 3006 Bern (CH)
(72) Inventor: BERTOLINA, Guillermo, 1150 Brussels (BE); MAGALHAES PEREIRA, Rodrigo, 86165 Augsburg (DE); VISHWANATHAN, Archishmaan, Chennai, 600116 (IN)
(74) Representative: Schäferjohann, Volker
(86) International application number: PCT/EP2022/076663
(87) International publication number: WO 2023/066605

(56) References cited:
- EP-A1- 0 213 414
- EP-A1- 2 815 936
- DE-A1- 10 110 490
- DE-A1- 102008 021 382
- FR-A1- 2 729 624
- FR-A1- 2 898 565
- JP-A- S62 173 357

## Description

The invention relates in a first aspect to a cleaning liquid reservoir system according to the preamble of claim 1. The invention further relates in a second aspect to a sensor cleaning system and in a third aspect to a vehicle.

Reservoirs for storing cleaning liquid in vehicles are generally known. Cleaning liquids are used for cleaning surfaces that are exposed to the environment and accumulate debris, dirt or the like during the operation of the vehicle. For this purpose, the reservoir in a vehicle is configured to provide cleaning liquid to one or more cleaning modules that are adapted to apply the cleaning liquid to the surface to be cleaned.

In cleaning systems for vehicles, it is generally a challenge to provide a sufficient amount of cleaning liquid for cleaning modules in different areas of the vehicle, in particular in light of the motivation of reduced lengths of fluid line and produced pressure loss.

DE 10 2017 201 756 B4 discloses a cleaning system for a motor vehicle, with at least one container for storing cleaning liquid, which can be conveyed to a respective cleaning nozzle via a line system by means of at least one pump, wherein the at least one pump is arranged outside the container within the line system. The approach disclosed in DE 10 2017 201 756 B4 is based on a liquid connection with a ring topology.

JP-S-62173357 A discloses a washer for window glass with a main tank and a sub tank. Detecting means are arranged in the main tank. When the main tanks run out of washing, a feed pump is started to pump water from the sub tank to the main tank.

DE 10 2008 021382 A1 discloses a method for determining the filling level of a liquid container for a windshield washer system. Furthermore, a method for refilling the liquid container is shown.

EP 0 213 414 A1 discloses a liquid container, the liquid container being usable for a cooling liquid or for a washing liquid or a combination.

EP 2 815 936 A1 discloses a washer for windscreens with a pressure tank, wherein the washer has sensor means and wherein a control unit is configured to activate a pump depending on the signal of the sensor means to increase the pressure of the pressure tank.

FR 2 729 624 A1 discloses a system with a main fluid tank and a second fluid tank, wherein a pump can be activated or deactivated to led fluid from the second fluid tank to the main fluid tank.

Despite such generally favorable approach, cleaning systems, and in particular cleaning liquid reservoir systems, can still be improved, in particular with respect to a uniform and efficient distribution of cleaning liquids to different regions of the vehicle.

It is therefore desirable to address at least one of the above problems. This is where the invention comes in, with the object to provide a cleaning liquid reservoir system that is improved, in particular with respect to a uniform and efficient distribution of a cleaning liquids.

In accordance with the invention, a cleaning liquid reservoir system is proposed according to claim 1. A cleaning liquid reservoir system for a vehicle is proposed, adapted to store a cleaning liquid for cleaning at least one surface of the vehicle, comprising a main reservoir, adapted to store a main amount of the cleaning liquid, and a pump for pumping the cleaning liquid.

According to the invention, at least one satellite reservoir is proposed, adapted to store a further amount of the cleaning liquid, wherein the cleaning liquid reservoir system comprises a liquid sensing device, adapted to detect a presence of the cleaning liquid outside of the main reservoir and in such case provide a liquid presence signal. The main reservoir is connected to the at least one satellite reservoir by means of a fluid line, and the pump is adapted to pump the cleaning liquid from the main reservoir to the at least one satellite reservoir, wherein the pump is adapted to be deactivated upon receiving the liquid presence signal.

The invention includes the finding that a structure with the main reservoir and at least one satellite reservoir is advantageous to provide cleaning liquid to different regions of the vehicle. Providing a further amount of the cleaning liquid in a satellite reservoir in such region enables a reliable supply of cleaning liquid to sensor cleaning modules in that region. Further, such structure results in relatively short liquid connections, i.e. fluid lines, between the satellite reservoir and a sensor cleaning module, resulting in reduced pressure losses, in particular compared to a conventional, centralized structure with only one main reservoir. Through a liquid sensing device, that is adapted to detect a presence of the cleaning liquid outside of the main reservoir, a presence of the cleaning liquid in a location of the cleaning liquid reservoir system can be detected and this information can be used for controlling the pump. The term "outside of the main reservoir" refers to a cleaning liquid containing part of the cleaning liquid reservoir system other than the main reservoir.

Further developments of the invention can be found in the dependent claims and show particularly advantageous possibilities to realize above described concept in light of the object of the invention and regarding further advantages.

Preferably, the pump is adapted to be activated by the electronic control unit by providing a liquid request signal. Preferably, the pump is adapted to be deactivated by the electronic control unit by interrupting, i.e. not providing, the liquid request signal. Preferably, the liquid request signal is an electric voltage.

It is preferably suggested that the main reservoir has a larger capacity than the satellite reservoir. In such development, the main reservoir can serve as a supply of cleaning liquid for at least one smaller-sized satellite reservoir, preferably for multiple satellite reservoirs. In such developments, the refilling of a cleaning liquid is facilitated, as only the main reservoir needs to be refilled, once the cleaning liquid is depleted. Preferably, the main reservoir has a capacity in the range of 2,0 Liters to 20 Liters. Preferably, the satellite reservoir has a capacity in the range of 0,25 Liter to 5 Liters. Preferably, the liquid sensing device is arranged in the satellite reservoir and/or in the fluid line.

In accordance with a further development, a consumption estimation module is proposed, adapted to estimate a consumption estimation value of the cleaning liquid and to provide a liquid request signal when the consumption estimation value reaches a consumption estimation threshold, wherein the pump is adapted to be activated upon receiving the liquid request signal. By means of a consumption estimation module, the consumption of cleaning liquid can be estimated. Preferably, the consumption estimation module is configured as a software module or the like module implementing an algorithm for estimating a consumption as described above. Preferably, the consumption estimation module is adapted to estimate the consumption of cleaning liquid by counting the number of performed cleaning cycles. Preferably, the consumption estimation module can comprise, or be connected to, at least one sensor cleaning module or a plurality of a sensor cleaning modules supplied by a satellite reservoir or a sensor cleaning control unit, such that the amount of performed cleaning cycles can be counted. In preferred developments, the consumption of cleaning liquid of one sensor cleaning module per cleaning cycle can be an amount in the range of 2 to 6 ml. By means of such connection, the actual consumption of cleaning liquid can be estimated, in particular without any further sensors or the like equipment. With a consumption estimation module, it can be assured that the satellite reservoirs are sufficiently filled with cleaning fluid, ensuring the availability of cleaning fluid.

In accordance with a further development, an electronic control unit is proposed, adapted to control the pump in dependence of the liquid presence signal and/or of the liquid request signal. Preferably, the electronic control unit is configured as a hardware module or as a software module. The electronic control unit can be part of a different control module of the vehicle, such as a vehicle control unit. In other embodiments, the electronic control unit can be a control unit assigned to the cleaning liquid reservoir system or to a sensor cleaning system or another control unit of the vehicle. Preferably, the electronic control unit comprises the consumption estimation module.

In accordance with a further development, it is proposed that the satellite reservoir has a liquid exit port, arranged in a top region of the satellite tank. "Top region" refers to a region of the reservoir in the upper 25%, preferably in the upper 10%, more preferably in the upper 5% of the reservoir, wherein "upper" refers to a vertical vehicle axis. A liquid exit port arranged in the top region is in particular advantageous for developments, where the at least one satellite reservoir is connected to the main reservoir in series. This is in particular because when refilling, the cleaning liquid will be passed to the subsequent satellite reservoir only when the liquid level has reached the top region of a certain satellite reservoir. Thus, each satellite reservoir will be filled subsequently.

According to the invention, at least two, preferably each, of the at least one satellite reservoir are connected to the main reservoir in series via the fluid line. A serial topology of satellite reservoirs advantageously results in a reduced amount and/or reduced lengths of fluid lines.

The liquid sensing device is a flow sensor and is, according to the invention, arranged in a liquid return line connecting the last satellite reservoir in series with the main reservoir. Developments with a flow sensor arranged in the liquid return line are particularly advantageous in combination with a serial topology of satellite reservoirs. This is in particular because when such flow sensor detects the presence of cleaning liquid, it can be safely concluded that all satellite reservoirs have been completely filled with the cleaning liquid, preferably each up to its liquid exit port. As a consequence, the liquid presence signal is provided and the pump can be deactivated.

Preferably, it is proposed in an unclaimed example that at least two, preferably each, of the at least one satellite reservoir are connected to the main reservoir via an individual fluid line. Such development results in a centralized or partly centralized topology. In particular, the cleaning liquid reservoir system comprises a manifold, adapted to connect the individual fluid lines to the main reservoir or to a manifold fluid line connecting the main reservoir to the manifold. In such developments, fluid lines can be kept relatively short, as a single fluid line can be used to connect the manifold to the main reservoir, and only from the manifold several individual fluid lines are used to connect the satellite reservoirs in a specific region of the vehicle.

An unclaimed example suggests that the liquid sensing device is a fluid level sensor and is arranged in the satellite reservoir. Preferably, a fluid level sensor is arranged in each satellite reservoir. A development where a fluid level sensor is arranged in each satellite reservoir enables a relatively exact determination of the level of cleaning liquid in each satellite reservoir and is particularly advantageous in developments where at least two satellite reservoirs are connected to the main reservoir via an individual fluid line. Preferably, the pump is adapted to be deactivated upon receiving the liquid presence signal from a fluid level sensor, more preferably from all fluid level sensors. Preferably, the electronic control unit and/or the consumption monitoring module is adapted to deactivate the pump when at least one liquid presence signal from a fluid level sensor, more preferably when the liquid presence signals from each fluid level sensor, are received. Such development ensures that the pump will be deactivated when the satellite reservoir, preferably all satellite reservoirs, are filled with cleaning liquid.

In accordance with a further unclaimed example, it is proposed that the satellite reservoir, preferably each satellite reservoir, comprises a floating valve, adapted to close a fluid connection, preferably the individual fluid lines, when the further amount of the cleaning liquid in the satellite reservoir has reached a fluid level threshold. Such development ensures that the central supplying of a cleaning liquid by the pump is individually stopped for a specific individual fluid line when the corresponding satellite reservoir is filled, until every satellite reservoir is filled.

Preferably, it is proposed that at least one satellite reservoir comprises a heating system, adapted to heat the cleaning liquid in the satellite reservoir. By means of a heating system, a freezing of the cleaning liquid can be prevented. By means of a heating system arranged in or at a satellite reservoir, only the further amount of cleaning liquid in the satellite reservoir is heated. Since in particular the further amount in the satellite reservoir is relatively small compared to the amount of cleaning liquid stored in the main reservoir, such development advantageously leads to smaller energy consumption for heating. Also, by equipping only specific satellite reservoirs that require heating, in particular not all satellite reservoirs, with a heating system, energy can be saved. Preferably, the heating system comprises an electric heating element.

In accordance with a further development, a consumption monitoring module is proposed, adapted to monitor a liquid monitoring value of the cleaning liquid, preferably by means of the liquid sensing device. Preferably, the electronic control module and/or the consumption monitoring module is adapted to provide a liquid request signal when the liquid monitoring value reaches a consumption monitoring threshold. Preferably, the liquid monitoring value is a numeral value characterizing the level of available cleaning liquid in the at least one satellite reservoir. In other developments, the liquid monitoring value can be a binary value that can have the value "1" when cleaning liquid is present and the value "0" when not, i.e. when the liquid monitoring value is below the consumption monitoring threshold. Preferably, the consumption monitoring threshold is a minimum value of the liquid monitoring value, in particular when the level of cleaning fluid is at or below a minimum cleaning liquid level such as 20 % or 10 % of the capacity of the satellite reservoir. With a consumption monitoring module, it is possible to monitor the level and/or the actual consumption of cleaning liquids in a relatively exact manner.

Preferably, the electronic control module and/or the consumption monitoring module is adapted to provide a liquid request signal when a low cleaning liquid level has been determined by a fluid level sensor in at least one satellite reservoir. In comparison to a consumption estimation module, the consumption monitoring module can be an alternative or additional means for providing a liquid request signal for activating the pump on the basis of sensor data, rather than an algorithm-based estimation.

A maintenance advice signal can be in the form of a message displayed to the operator of the vehicle, indicating that cleaning fluid needs to be refilled. Preferably, the consumption monitoring module is adapted to determine the liquid monitoring value on the basis of one or more liquid presence signals. By means of the consumption monitoring module, an overall consumption of cleaning fluid can be determined, in particular measured or approximated, via the liquid sensing devices, in particular the flow sensor or the fluid level sensors. By sensing the presence or consumption of cleaning liquid in the satellite reservoirs and/or the fluid line, the remaining level of cleaning liquid in the main reservoir can be estimated. By doing so, no further sensors are needed, in particular not in the main reservoir, for determining an overall consumption of cleaning liquid of the cleaning liquid reservoir system. Preferably, the electronic control module and/or the consumption monitoring module is adapted to provide a maintenance advice signal when the determined overall consumption of cleaning fluid signalizes a low level of cleaning fluid in the main reservoir.

Preferably, the main reservoir comprises a main fluid level sensor that is adapted to determine the liquid monitoring value and/or the current level of cleaning liquid in the main reservoir. Preferably, the main fluid level sensor is adapted to provide a signal, in particular a maintenance advice signal, when the level of cleaning liquid in the main reservoir, that is the main amount of cleaning liquid, is equal to or below a minimum cleaning liquid level. Preferably, the main fluid level sensor is connected to the electronic control unit and/or to the consumption monitoring module. The expression "fluid level" refers to the level of a liquid.

Preferably, the electronic control unit, more preferably the consumption monitoring module and/or the consumption estimation module, is adapted to provide a warning message, in particular a maintenance advice signal, when the level of cleaning liquid in the main reservoir, that is the main amount of cleaning liquid, is equal to or below a minimum cleaning liquid level.

In accordance with a further development, the distance between the main reservoir and the at least one satellite reservoir, and preferably further between each satellite reservoir, is in a range from 0,5 m to 20 m, preferably from 1 m to 10 m. Preferably, the length of the fluid line, or a fluid line segment or an individual fluid line or the fluid return line is in a range from 0,5 m to 20 m, preferably from 1 m to 10 m. Preferably, the fluid line and/or the fluid line segment and/or the individual fluid line and/or the fluid return line is a hose, pipe or the like liquid connection means.

In a second aspect of the invention, a sensor cleaning system for a vehicle is proposed, comprising a cleaning liquid reservoir system according to the first aspect of the invention, and at least one sensor cleaning module, adapted to provide a cleaning fluid to at least one cleaning nozzle.

In a third aspect of the invention, a vehicle is proposed, preferably a commercial vehicle or a passenger vehicle, comprising a cleaning liquid reservoir system according to the first aspect of the invention and/or a sensor cleaning system according to the second aspect of the invention.

It shall be understood that the cleaning liquid reservoir system according to the first aspect of the invention, the sensor cleaning system according to the second aspect of the invention and the vehicle according to the third aspect of the invention comprise identical or similar developments, in particular as described in the dependent claims. Therefore, a development of one aspect of the invention is also applicable to another aspect of the invention.

These and other aspects of the invention will be apparent from and elucidated with reference to the embodiments described hereinafter. The embodiments of the invention are described in the following on the basis of the drawings in comparison with the state of the art, which is also partly illustrated. The latter is not necessarily intended to represent the embodiments to scale. Drawings are, where useful for explanation, shown in schematized and/or slightly distorted form. With regard to additions to the lessons immediately recognizable from the drawings, reference is made to the relevant state of the art. It should be borne in mind that numerous modifications and changes can be made to the form and detail of an embodiment without deviating from the general idea of the invention. The features of the invention disclosed in the description, in the drawings and in the claims may be essential for the further development of the invention, either individually or in any combination.

In addition, all combinations of at least two of the features disclosed in the description, drawings and/or claims fall within the scope of the invention. The general idea of the invention is not limited to the exact form or detail of the preferred embodiment shown and described below or to an object which would be limited in comparison to the object claimed in the claims. For specified design ranges, values within the specified limits are also disclosed as limit values and thus arbitrarily applicable and claimable.

Further advantages, features and details of the invention result from the following description of the preferred embodiments as well as from the drawings, which show in:
- Fig. 1: a first preferred embodiment of the invention with a plurality of three satellite reservoirs in a serial topology and a flow sensor arranged in a liquid return line,
- Fig. 2: a second unclaimed exemple with a plurality of three satellite reservoirs in a serial topology and fluid level sensors arranged in each satellite reservoir,
- Fig. 3: a third unclaimed example with a plurality of three satellite reservoirs in a centralized topology with respect to a manifold and fluid level sensors arranged in each satellite reservoir,
- Fig. 4: a vehicle comprising a cleaning liquid reservoir system according to the first aspect of the invention.

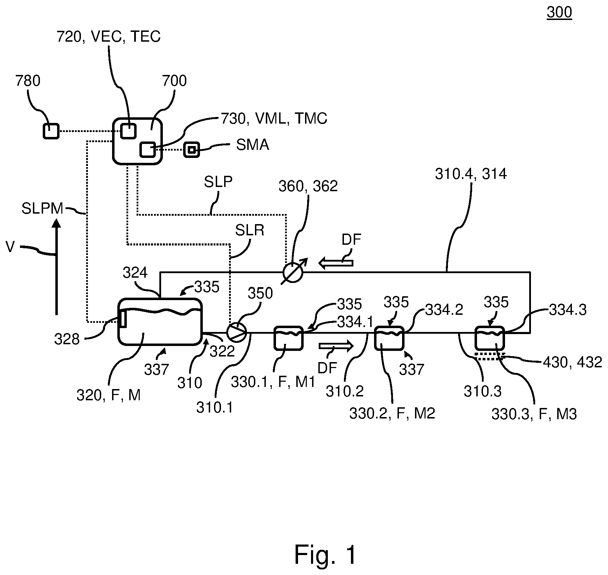

Fig. 1 shows a cleaning liquid reservoir system 300 according to a first preferred embodiment of the invention. The cleaning liquid reservoir system 300 comprises a main reservoir 320, adapted to store a main amount M of a cleaning liquid F. The main reservoir 320 comprises a main liquid exit port 322, which is located in a bottom region 337 of the main reservoir 320. "Bottom region" refers to a region of a reservoir in the lower 25%, preferably in the lower 10%, more preferably in the lower 5% of the reservoir, wherein "lower" refers to a vertical vehicle axis V. The main liquid exit port 322 is connected to a pump 350 in a liquid transferring manner. The pump 350 is adapted to pump the cleaning fluid F in a fluid flow direction DF from the main reservoir 320 through a fluid line 310. The pump 350 is arranged in a first fluid line segment 310.1 of the fluid line 310. The fluid line 310 extends from the main liquid exit port 322 to the pump 350 and further to a plurality of satellite reservoirs 330 connected in series and further back to a main liquid entrance port 324 of the main reservoir 320. The main liquid entrance port 324 is arranged in a top region of the main reservoir 320. "Top region" refers to a region of a reservoir in the upper 25%, preferably in the upper 10%, more preferably in the upper 5% of the reservoir, wherein "upper" refers to the vertical vehicle axis V.

The cleaning liquid reservoir system 300 comprises a first satellite reservoir 330.1, a second satellite reservoir 330.2 and a third satellite reservoir 330.3.

The first satellite reservoir 330.1 is adapted to store a first further amount M1 of cleaning liquid F and is connected to the pump 350, and the main reservoir 320, via a first fluid line segment 310.1 of the fluid line 310. The first satellite reservoir 330.1 comprises a first liquid exit port 334.1 which is arranged in the top region 335 of the first satellite reservoir 330.2. The first satellite reservoir 330.1 is connected via the first liquid exit port 334.1 via a second fluid line segment 310.2 to a second satellite reservoir 330.2.

The second satellite reservoir 330.2 is adapted to store a second further amount M2 of cleaning liquid. The second satellite reservoir 330.2 comprises a second liquid exit port 334.2, which is arranged in the top region 335 of the second satellite reservoir 330.2. The second satellite reservoir 330.2 is connected via the second liquid exit port 334.2 via a third fluid line segment 310.3 to a third satellite reservoir 330.3.

The third satellite reservoir 330.3 is adapted to store a third further amount M3 of cleaning liquid F. The third satellite reservoir 330.3 comprises a third liquid exit port 334.3, which is arranged in the top region of the third satellite reservoir 330.3. The third satellite reservoir 330.3 is connected via the third liquid exit port 334.3 via a fourth fluid line segment 310.4 to the main liquid entrance port 324 of the main reservoir 320. The fourth fluid line segment 310.4 is the return line 314 of the cleaning liquid reservoir system 300.

The cleaning liquid reservoir system 300 comprises a liquid sensing device 360. The liquid sensing device 360 in this embodiment is a flow sensor 362, that is arranged in the liquid return line 314. The flow sensor 362 is adapted to provide a liquid presence signal SLP when cleaning liquid F is present at the liquid sensing device 360. The liquid sensing device 360 is electrically, here electronically, connected to an electronic control unit 700. The electronic control unit 700 is electrically connected to the pump 350 and is adapted to provide a liquid request signal SLR to the pump 350 in order to activate the pump 350 for pumping cleaning fluid F.

The electronic control unit 700 is adapted to provide a liquid request signal SLR when no liquid presence signal SLP is received from the flow sensor 362, and preferably when also the consumption estimation module 720 signalizes that the consumption estimation value VEC has reached a consumption estimation threshold TEC. The electronic control unit 700 is further adapted to provide no liquid request signal SLR when a liquid presence signal SLP is received from the flow sensor 362. When the pump 350 is activated by means of the liquid request signal SLR, the pump 350 is pumping cleaning liquid F from the main reservoir 322 the first satellite reservoir 330.1. The liquid request signal SLR can be an electric or electronic signal. Preferably, as it is the case here, the liquid request signal SLR is an electric voltage. Due to the position of the first liquid exit port 334.1 in the top region 335 of the first satellite reservoir 330.1, the cleaning liquid F will continue to flow to the second satellite reservoir 330.2 when its level has reached the top region 335 of the first satellite reservoir 330.1. The above stated applies for the second and third satellite reservoir 330.2, 330.3 with according numbering of the reference signs.

When the last satellite reservoir 330 connected in series, here the third satellite reservoir 330.3, is filled up to its top region 335, the cleaning liquid F will eventually reach the return line 314, where its presence is detected by the liquid sensing device 360. Thus, by the described topology of main reservoir 320, satellite reservoirs 330 and liquid sensing device 360 in the form of the flow sensor 362, it can be detected when the filling of the satellite reservoirs is completed.

In the embodiment shown, the electronic control unit 700 comprises a consumption estimation module 720. The consumption estimation module 720 is adapted to estimate a consumption estimation value VEC of the cleaning liquid F and further to provide the liquid request signal SLR when the consumption estimation value VEC reaches a consumption estimation threshold TEC.

Preferably, as shown here, the consumption estimation module 320 is adapted to count the cleaning cycles of the sensor cleaning modules that are supplied by the satellite reservoirs 330.1, 330.2, 330.3. By doing so, the amount of consumed cleaning liquid F can be estimated, in particular individually for each satellite reservoir. The consumption estimation module 720 and/or the electronic control unit 700 is electronically connected to a sensor cleaning control unit 780 of the sensor cleaning modules 100 or the sensor cleaning system 200, in particular for the counting of the cleaning cycles. A cleaning cycle describes an application of a specific amount of cleaning liquid to a sensor surface.

In preferred embodiments, the sensor cleaning control unit 780 is part of the electronic control unit 700.

As exemplarily shown here for the third satellite reservoir 330.3, any embodiment can comprise one or more heating systems 430 for heating the cleaning liquid F. Preferably, as shown here, the heating system 430 comprises at least one heating element 432 and can be arranged at or in a satellite reservoir 330 for heating the further amount of cleaning liquid F contained therein.

In optional embodiments, the main reservoir 320 can comprise a main fluid level sensor 328, adapted to determine the level of cleaning liquid F in the main reservoir 320 and to provide a main liquid presence signal SLPM, indicating the presence and/or the level of cleaning liquid F.

Preferably, as shown here, the cleaning liquid reservoir system 300 can comprise a consumption monitoring module 730, adapted to monitor a liquid monitoring value VML of the cleaning liquid F. The consumption monitoring module 730 is adapted to determine the liquid monitoring value VML by means of the liquid sensing device 360 or by a main liquid presence signal SLPM of the main fluid level sensor 328 arranged in the main reservoir. The consumption monitoring module 730 is adapted to provide a maintenance advice signal SMA, when the liquid monitoring value VML reaches a consumption monitoring threshold TMC. In the case of the flow sensor 362 in the shown embodiment, the consumption monitoring module 730 can be adapted to provide a maintenance advice signal SMA when no liquid presence signal SLP is provided by the flow sensor 362 after the pump 350 has been activated for a specified amount of time. In other embodiments, the consumption monitoring module 730 can additionally or alternatively be connected to other liquid sensing devices, e.g. one or more fluid level sensors in the satellite reservoirs.

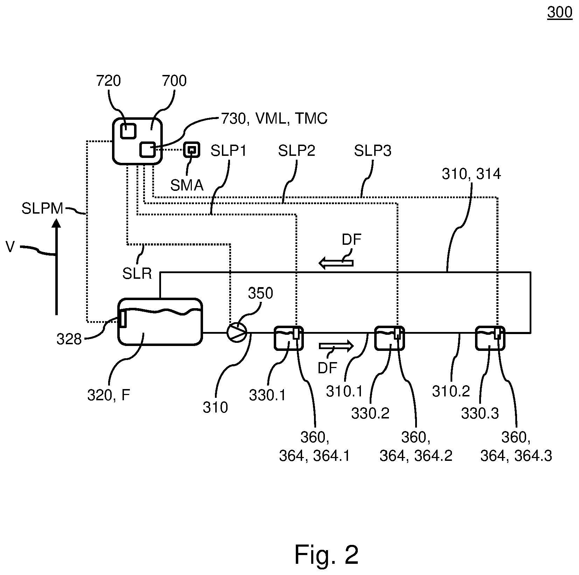

Fig. 2 shows a second unclaimed example of the cleaning liquid reservoir system 300. In comparison to the first embodiment shown in Fig. 1, each satellite reservoir 330 comprises a liquid sensing device 360 in the form of a fluid level sensor 364. That is, the first satellite reservoir 330.1 comprises a first fluid level sensor 364.1 adapted to provide a first liquid presence signal SLP1, the second satellite reservoir 330.2 comprises a second fluid level sensor 364.2 adapted to provide second liquid presence signal SLP2, and the third satellite reservoir 330.3 comprises a third fluid level sensor 364.3 adapted to provide a third liquid presence signal SLP3. Further, the cleaning liquid reservoir system 300 shown here does not comprise a liquid sensing device arranged in the return line 314. By means of the shown liquid sensing devices 360, the level of cleaning liquid F in each satellite reservoir 330 can be determined individually and thus, the current state of the cleaning liquid reservoir system 300 can be determined more accurately with regard to the cleaning liquid F. In particular, a liquid monitoring value VML can be determined by the consumption monitoring module 730 on the basis of the liquid presence signals SLP1, SLP2, SLP3, and/or a main liquid presence signal SLPM of the main fluid level sensor 328. The consumption monitoring module 730 is preferably adapted to provide the liquid request signal SLR to the pump 350 when the liquid monitoring value VML in at least one satellite reservoir 330 is equal to or below the consumption monitoring threshold TMC.

In the second embodiment, the electronic control unit 700 is adapted to activate the pump 350 by means of the liquid request signal SLR when one of the liquid presence signals SLP1, SLP2. SLP3 indicates the lack or low level of cleaning fluid F in the corresponding satellite reservoir 330.1, 330.2, 330.3. Due to the serial structure, and analogously to the first embodiment shown in Fig. 1, the satellite reservoirs 330.1 330.2, 330.3 will be refilled with cleaning fluid F subsequently upon activation of the pump 350.

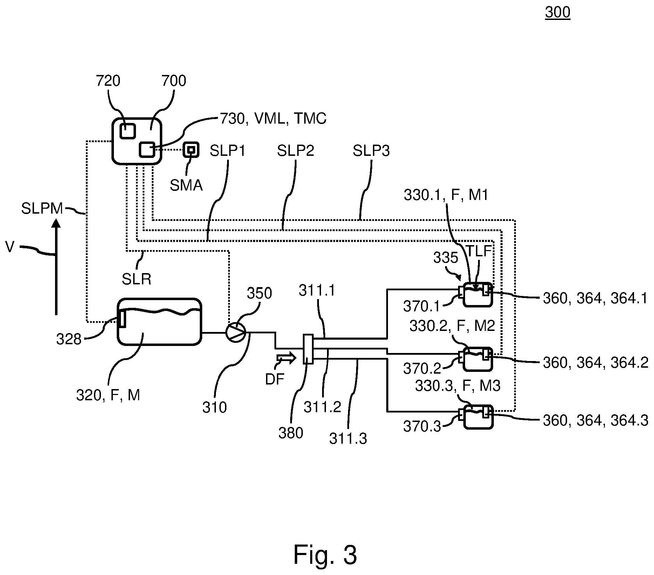

Fig. 3 shows a third example of a cleaning liquid reservoir system 300. In comparison to the second embodiment shown in Fig. 2, the three satellite reservoirs 330.1, 330.2, 330.3 are arranged in parallel and connected to a manifold 380. That is, the first satellite reservoir 330.1 is connected to the manifold 380 by means of a first individual fluid line 311.1, the second satellite reservoir 330.2 is connected by means of a second individual fluid line 311.2, and the third satellite reservoir 330.3 is connected by means of a third individual fluid line 311.3. The manifold 380 is connected to the pump 350 and the main reservoir 320, respectively, via the fluid line 310. There is no return line 314. Further, each satellite reservoir 330.1, 330.2, 330.3 comprises a floating valve 370.1, 370.2, 370.3, which is adapted to close the liquid transferring connection of the individual fluid line 311.1, 311.2, 311.3 when the satellite reservoir 330.1, 330.2, 330.3 is filled with cleaning liquid F, in particular filled to its top region 350. That is, when a fluid level threshold TLF is reached. By means of a floating valve 370, the filling of an individual satellite reservoir 330 can be stopped when its fluid level threshold TLF is reached, whereas the filling of other satellite reservoirs 330 continue. When all satellite reservoirs 330.1, 330.2, 330.3 are filled with cleaning liquid F, preferably when all liquid presence signals SLP1, SLP2, SLP3 are provided, the pump 350 is stopped, in particular the electronic control unit 700 stops providing a liquid request signal SLR.

In comparison to the first and second embodiment shown in Fig. 1 and Fig. 2 that comprise a closed circuit of cleaning fluid F, the third embodiment shown in Fig. 3 comprises an open circuit of cleaning fluid F, as there is no return line 314.

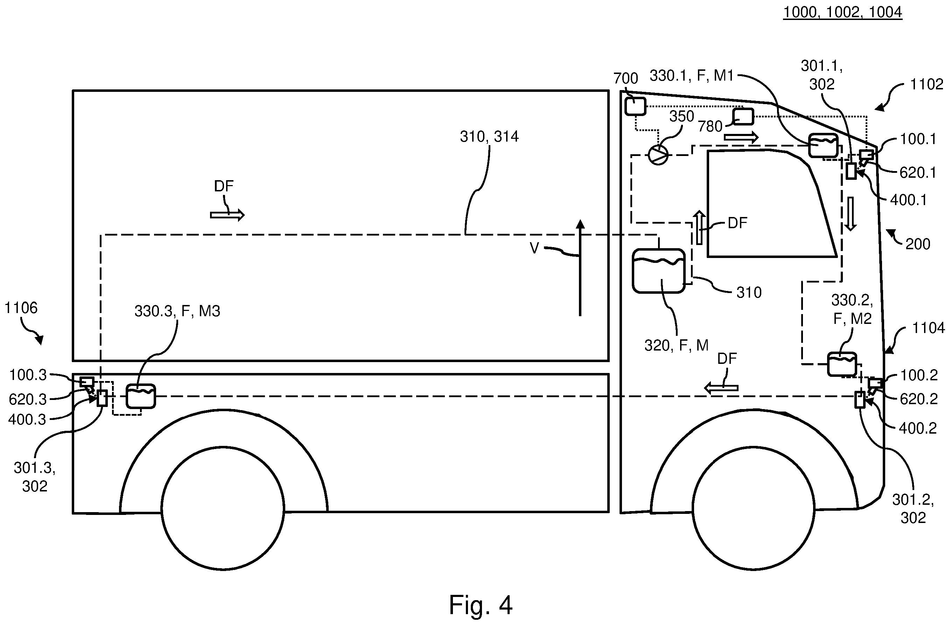

Fig. 4 shows a vehicle 1000 in the form of a commercial vehicle 1002 comprising a sensor cleaning system 200 with sensor cleaning modules 100.1, 100.2, 100.3 and a cleaning liquid reservoir system 300 according to the concept of the invention. In other embodiments, the vehicle 1000 can be of different type, such as a passenger vehicle 1004 or the like. The sensor cleaning system 200 is controlled by a sensor cleaning control unit 780, whereas one electronic connection to the first sensor cleaning module 100.1 is exemplarily shown in Fig. 4. In other embodiments, the electronic control unit 700 of the cleaning liquid reservoir system 300 and the sensor cleaning control unit 780 can be one hardware or software module. In again other embodiments, the electronic control unit 700 of the cleaning liquid reservoir system 300 and the sensor cleaning control unit 780 each can be part of a different hardware or software module of the vehicle 1000.

In particular, the cleaning liquid reservoir system 300 can be of the type of the first embodiment shown in Fig. 1 or of the second embodiment shown in Fig. 2, as the position and type of the liquid sensing device 360 is not shown. However, also any other embodiment of the invention can be applied in such vehicle 1000, such as the third embodiment shown in Fig. 3.

The cleaning liquid reservoir system 300 comprises three serially arranged satellite reservoirs 330.1, 330.2, 330.3. The first satellite reservoir 330.1 is arranged in an upper front region 1102 of the vehicle 1000 and is connected to a first sensor cleaning module 100.1 with the first cleaning nozzle 620.1. The first sensor cleaning module 100.1 is adapted to clean a first sensor surface 400.1, which is also arranged in the upper front region 1102. The first satellite reservoir 330.1 is adapted to provide cleaning fluid F to the first sensor cleaning module 100.1.

Analogously to the above described first satellite reservoir 330.1, the second satellite reservoir 330.2 is connected to a second sensor cleaning module 100.2, which is assigned to a second sensor surface 400.2, and the third satellite reservoir 330.3 is connected to a third sensor cleaning module 100.3, which again is assigned to a third sensor surface 400.3.

The second satellite reservoir 330.2 and the second sensor cleaning module 100.2 are arranged in a lower front region 1104 of the vehicle 1000. The third satellite reservoir 330.3 and the third sensor cleaning module 100.3 are arranged in a lower rear region 1106 of the vehicle 1000. Also here, the expressions "upper" and "lower" refers to a vertical vehicle axis V.

With the cleaning liquid reservoir system 300, an efficient spatial distribution of satellite reservoirs 330 is achieved, in particular with a relatively short fluid line lengths as well as relatively few and simple fluidic components such as liquid sensing devices, pumps and the like. Further, through said spatial distribution, the satellite reservoirs can be arranged closed to the sensor cleaning modules, resulting in reduced pressure losses and thus, and energy efficient operation and a good cleaning performance.

### List of reference signs (part of the description)

- 100: sensor cleaning module
- 100.1-3: first to third sensor cleaning module
- 200: sensor cleaning system
- 300: cleaning liquid reservoir system
- 310: fluid line
- 310.1-4: first to fourth fluid line segment
- 311: individual fluid line
- 311.1-3: first to third individual fluid line
- 314: return line
- 320: main reservoir
- 322: main liquid exit port
- 324: main liquid entrance port
- 328: main fluid level sensor
- 330: satellite reservoir
- 330.1-3: first to third satellite reservoir
- 334: liquid exit port of the satellite reservoir
- 334.1-3: first to third liquid exit port
- 335: top region of the satellite or main reservoir
- 337: bottom region of the satellite or main reservoir
- 350: pump
- 360: liquid sensing device
- 362: flow sensor
- 364: fluid level sensor
- 364.1-3: first to third fluid level sensor
- 370: floating valve
- 370.1-3: first to third floating valve
- 380: manifold
- 400: sensor surface
- 400.1-3: first to third sensor surface
- 430: heating system
- 432: heating element
- 620: cleaning nozzle
- 620.1-3: first to third cleaning nozzle
- 700: electronic control unit
- 720: consumption estimation module
- 780: sensor cleaning control unit
- 1000: vehicle
- 1002: commercial vehicle
- 1004: passenger vehicle
- 1102: upper front region of the vehicle
- 1104: lower front region of the vehicle
- 1106: lower rear region of the vehicle

- DF: fluid flow direction
- F: cleaning liquid
- M: main amount
- M1, M2, M3: first, second, third further amount
- SLP: liquid presence signal
- SLP1, SLP2, SLP3: first to third liquid presence signal
- SLPM: main liquid presence signal
- SLR: liquid request signal
- SMA: maintenance advice signal
- TEC: consumption estimation threshold
- TLF: fluid level threshold
- TMC: consumption monitoring threshold
- V: vertical vehicle axis
- VEC: consumption estimation value
- VML: liquid monitoring value

## Claims

1. Cleaning liquid reservoir system (300) for a vehicle (1000), adapted to store a cleaning liquid (F) for cleaning at least one surface (300) of the vehicle (1000), comprising
- a main reservoir (320), adapted to store a main amount (M) of the cleaning liquid (F), and
- a pump (350) for pumping the cleaning liquid (F),
- at least two satellite reservoirs (330, 330.1, 330.2, 330.3), adapted to store a further amount (M1, M2, M3) of the cleaning liquid (F), wherein
- the cleaning liquid reservoir system (300) comprises a liquid sensing device (360), adapted to detect a presence of the cleaning liquid (F) outside of the main reservoir (320) and in such case provide a liquid presence signal (SLP), and
- the main reservoir (320) is connected to the at least two satellite reservoirs (330, 330.1, 330.2, 330.3) by means of a fluid line (310), and
- the pump (350) is adapted to pump the cleaning liquid (F) from the main reservoir (320) to the at least two satellite reservoirs (330, 330.1, 330.2, 330.3),
wherein
- the pump (350) is adapted to be deactivated upon receiving the liquid presence signal (SLP),
**characterized in that**
- at least two, preferably each, of the satellite reservoirs (330, 330.1, 330.2, 330.3) are connected to the main reservoir (320) in series via the fluid line (310), wherein
- the liquid sensing device (360) is a flow sensor (362) and is arranged in a liquid return line (314) connecting the last satellite reservoir (330) in series and the main reservoir (320).

2. Cleaning liquid reservoir system (300) according to claim 1, **characterized by**
- a consumption estimation module (720), adapted to estimate a consumption estimation value (VEC) of the cleaning liquid (F) and to provide a liquid request signal (SLR) when the consumption estimation value (VEC) reaches a consumption estimation threshold (TEC), wherein
- the pump (350) is adapted to be activated upon receiving the liquid request signal (SLR).

3. Cleaning liquid reservoir system (300) according to claim 1 or 2, **characterized by**
- an electronic control unit (700), adapted to control the pump (350) in dependence of the liquid presence signal (SLP, SLP1, SLP2, SLP3) and/or of the liquid request signal (SLR).

4. Cleaning liquid reservoir system (300) according to one of the preceding claims, **characterized in that**
- the satellite reservoir (330) has a liquid exit port (334), arranged in a top region (335) of the satellite tank (330).

5. Cleaning liquid reservoir system (300) according to one of the preceding claims, **characterized in that**
- at least one satellite reservoir (330) comprises a heating system (430), adapted to heat the cleaning liquid (F) in the satellite reservoir (330).

6. Cleaning liquid reservoir system (300) according to one of the preceding claims, **characterized by**
- a consumption monitoring module (730), adapted to monitor a liquid monitoring value (VML) of the cleaning liquid (F), preferably by means of the at least one liquid sensing device (360), and to provide a liquid request signal (SLR) when the liquid monitoring value (VML) reaches a consumption monitoring threshold (TMC).

7. Sensor cleaning system (200) for a vehicle (1000), comprising
- a cleaning liquid reservoir system (300) according to one of the preceding claims and
- at least one sensor cleaning module (100), adapted to provide a cleaning fluid (F) to at least one cleaning nozzle (620).

8. Vehicle (1000), preferably commercial vehicle (1002) or passenger vehicle (1004), comprising a cleaning liquid reservoir system (300) according to one of claims 1 to 6 and/or a sensor cleaning system (200) according to claim 7.

## Patentansprüche

1. Reinigungsflüssigkeitsbehältersystem (300) für ein Fahrzeug (1000), das angepasst ist, um eine Reinigungsflüssigkeit (F) zum Reinigen mindestens einer Oberfläche (300) des Fahrzeugs (1000) zu lagern, umfassend
- einen Hauptbehälter (320), das angepasst ist, um eine Hauptmenge (M) der Reinigungsflüssigkeit (F) zu lagern, und
- eine Pumpe (350) zum Pumpen der Reinigungsflüssigkeit (F),
- mindestens zwei Satellitenbehälter (330, 330,1, 330,2, 330,3), die angepasst sind, um eine weitere Menge (M1, M2, M3) der Reinigungsflüssigkeit (F) zu lagern, wobei
- das Reinigungsflüssigkeitsbehältersystem (300) eine Flüssigkeitserfassungsvorrichtung (360) umfasst, die angepasst ist, um eine Anwesenheit der Reinigungsflüssigkeit (F) außerhalb des Hauptbehälters (320) zu erkennen und in einem solchen Fall ein Flüssigkeitsanwesenheitssignal (SLP) bereitzustellen, und
- der Hauptbehälter (320) mit den mindestens zwei Satellitenbehältern (330, 330,1, 330,2, 330,3) mittels einer Fluidleitung (310) verbunden ist und
- die Pumpe (350) angepasst ist, um die Reinigungsflüssigkeit (F) aus dem Hauptbehälter (320) zu den mindestens zwei Satellitenbehältern (330, 330,1, 330,2, 330,3) zu pumpen, wobei
- die Pumpe (350) angepasst ist, um bei einem Empfangen des Flüssigkeitsanwesenheitssignals (SLP) deaktiviert zu werden,
**dadurch gekennzeichnet, dass**
- mindestens zwei, vorzugsweise jeder, der Satellitenbehälter (330, 330,1,330,2, 330,3) mit dem Hauptbehälter (320) in Reihe über die Fluidleitung (310) verbunden sind, wobei
- die Flüssigkeitserfassungsvorrichtung (360) ein Durchflusssensor (362) ist und in einer Flüssigkeitsrücklaufleitung (314) angeordnet ist, die den letzten Satellitenbehälter (330) in der Reihe und den Hauptbehälter (320) verbindet.

2. Reinigungsflüssigkeitsbehältersystem (300) nach Anspruch 1, **gekennzeichnet durch**
- ein Verbrauchsschätzungsmodul (720), das angepasst ist, um einen Verbrauchsschätzungswert (VEC) der Reinigungsflüssigkeit (F) zu schätzen und um ein Flüssigkeitsanforderungssignal (SLR) bereitzustellen, wenn der Verbrauchsschätzungswert (VEC) eine Verbrauchsschätzungsschwelle (TEC) erreicht, wobei
- die Pumpe (350) angepasst ist, um bei dem Empfangen des Flüssigkeitsanforderungssignals (SLR) aktiviert zu werden.

3. Reinigungsflüssigkeitsbehältersystem (300) nach Anspruch 1 oder 2, **gekennzeichnet durch**
- eine elektronische Steuerungseinheit (700), die angepasst ist, um die Pumpe (350) in Abhängigkeit von dem Flüssigkeitsanwesenheitssignal (SLP, SLP1, SLP2, SLP3) und/oder von dem Flüssigkeitsanforderungssignal (SLR) zu steuern.

4. Reinigungsflüssigkeitsbehältersystem (300) nach einem der vorstehenden Ansprüche, **dadurch gekennzeichnet, dass**
- der Satellitenbehälter (330) eine Flüssigkeitsaustrittsöffnung (334) aufweist, die in einer oberen Region (335) des Satellitentanks (330) angeordnet ist.

5. Reinigungsflüssigkeitsbehältersystem (300) nach einem der vorstehenden Ansprüche, **dadurch gekennzeichnet, dass**
- mindestens ein Satellitenbehälter (330) ein Heizsystem (430) umfasst, das angepasst ist, um die Reinigungsflüssigkeit (F) in dem Satellitenbehälter (330) zu erhitzen.

6. Reinigungsflüssigkeitsbehältersystem (300) nach einem der vorstehenden Ansprüche, **gekennzeichnet durch**
- ein Verbrauchsüberwachungsmodul (730), das angepasst ist, um einen Flüssigkeitsüberwachungswert (VML) der Reinigungsflüssigkeit (F), vorzugsweise mittels der mindestens einen Flüssigkeitserfassungsvorrichtung (360), zu überwachen und um ein Flüssigkeitsanforderungssignal (SLR) bereitzustellen, wenn der Flüssigkeitsüberwachungswert (VML) eine Verbrauchsüberwachungsschwelle (TMC) erreicht.

7. Sensorreinigungssystem (200) für ein Fahrzeug (1000), umfassend
- ein Reinigungsflüssigkeitsbehältersystem (300) nach einem der vorstehenden Ansprüche und
- mindestens ein Sensorreinigungsmodul (100), das angepasst ist, um ein Reinigungsfluid (F) an mindestens eine Reinigungsdüse (620) bereitzustellen.

8. Fahrzeug (1000), vorzugsweise Nutzfahrzeug (1002) oder Personenkraftwagen (1004), umfassend ein Reinigungsflüssigkeitsbehältersystem (300) nach einem der Ansprüche 1 bis 6 und/oder ein Sensorreinigungssystem (200) nach Anspruch 7.

## Revendications

1. Système de réservoir de liquide de nettoyage (300) pour un véhicule (1000), conçu pour stocker un liquide de nettoyage (F) destiné à nettoyer au moins une surface (300) du véhicule (1000), comprenant
- un réservoir principal (320), conçu pour stocker une quantité principale (M) du liquide de nettoyage (F), et
- une pompe (350) destinée à pomper le liquide de nettoyage (F),
- au moins deux réservoirs satellites (330, 330.1, 330.2, 330.3), conçus pour stocker une quantité supplémentaire (M1, M2, M3) du liquide de nettoyage (F), dans lequel
- le système de réservoir de liquide de nettoyage (300) comprend un dispositif de détection de liquide (360), conçu pour détecter une présence du liquide de nettoyage (F) à l'extérieur du réservoir principal (320) et dans un tel cas fournir un signal de présence de liquide (SLP), et
- le réservoir principal (320) est relié aux au moins deux réservoirs satellites (330, 330.1, 330.2, 330.3) au moyen d'une conduite de fluide (310), et
- la pompe (350) est conçue pour pomper le liquide de nettoyage (F) du réservoir principal (320) vers les au moins deux réservoirs satellites (330, 330.1, 330.2, 330.3), dans lequel
- la pompe (350) est conçue pour être désactivée lors de la réception du signal de présence de liquide (SLP), **caractérisé en ce que**
- au moins deux, de préférence chacun, des réservoirs satellites (330, 330.1, 330.2, 330.3) sont reliés au réservoir principal (320) en série par l'intermédiaire de la conduite de fluide (310), dans lequel
- le dispositif de détection de liquide (360) est un capteur de débit (362) et est agencé dans une conduite de retour de liquide (314) reliant le dernier réservoir satellite (330) en série et le réservoir principal (320).

2. Système de réservoir de liquide de nettoyage (300) selon la revendication 1, **caractérisé par**
- un module d'estimation de consommation (720), conçu pour estimer une valeur d'estimation de consommation (VEC) du liquide de nettoyage (F) et pour fournir un signal de demande de liquide (SLR) lorsque la valeur d'estimation de consommation (VEC) atteint un seuil d'estimation de consommation (TEC), dans lequel
- la pompe (350) est conçue pour être activée lors de la réception du signal de demande de liquide (SLR).

3. Système de réservoir de liquide de nettoyage (300) selon la revendication 1 ou 2, **caractérisé par**
- une unité de commande électronique (700), conçue pour commander la pompe (350) en fonction du signal de présence de liquide (SLP, SLP1, SLP2, SLP3) et/ou du signal de demande de liquide (SLR).

4. Système de réservoir de liquide de nettoyage (300) selon l'une des revendications précédentes, **caractérisé en ce que**
- le réservoir satellite (330) présente un orifice de sortie de liquide (334), agencé dans une région supérieure (335) du réservoir satellite (330).

5. Système de réservoir de liquide de nettoyage (300) selon l'une des revendications précédentes, **caractérisé en ce que**
- au moins un réservoir satellite (330) comprend un système de chauffage (430), conçu pour chauffer le liquide de nettoyage (F) dans le réservoir satellite (330).

6. Système de réservoir de liquide de nettoyage (300) selon l'une des revendications précédentes, **caractérisé par**
- un module de surveillance de consommation (730), conçu pour surveiller une valeur de surveillance de liquide (VML) du liquide de nettoyage (F), de préférence au moyen de l'au moins un dispositif de détection de liquide (360), et pour fournir un signal de demande de liquide (SLR) lorsque la valeur de surveillance de liquide (VML) atteint un seuil de surveillance de consommation (TMC).

7. Système de nettoyage de capteur (200) pour un véhicule (1000), comprenant
- un système de réservoir de liquide de nettoyage (300) selon l'une des revendications précédentes et
- au moins un module de nettoyage de capteur (100), conçu pour fournir un fluide de nettoyage (F) à au moins une buse de nettoyage (620).

8. Véhicule (1000), de préférence un véhicule utilitaire (1002) ou un véhicule de tourisme (1004), comprenant un système de réservoir de liquide de nettoyage (300) selon l'une des revendications 1 à 6 et/ou un système de nettoyage de capteur (200) selon la revendication 7.
